# EUROPÄISCHE PATENTSCHRIFT

(11) **EP 0 752 977 B1**
(45) Veröffentlichungstag und Bekanntmachung des Hinweises auf die Patenterteilung: **28.10.1998**
(21) Anmeldenummer: 95912949.5
(22) Anmeldetag: 30.03.1995
(51) Int. Cl.: C04B 24/34, C09F 1/04

(54) **LUFTPORENBILDNER FÜR BETON- UND MÖRTELMISCHUNGEN**
AIR ENTRAINING AGENT FOR CONCRETES AND MORTARS
AGENT AERATEUR POUR MELANGES DE BETON ET DE MORTIER

(30) Priorität: 31.03.1994 AT 687/94
(43) Veröffentlichungstag der Anmeldung: 15.01.1997
(73) Patentinhaber: Krems Chemie Aktiengesellschaft, A-3500 Krems (AT)
(72) Erfinder: SYCHRA, Marcel, A-3500 Krems (AT); STEINDL, Harald, - (AT)
(74) Vertreter: Pfeifer, Otto, Dipl.-Ing.
(86) Internationale Anmeldenummer: AT9500065
(87) Internationale Veröffentlichungsnummer: WO9526936

(56) Entgegenhaltungen:
- EP-A- 0 150 754
- DATABASE WPI Section Ch, Week 8117 Derwent Publications Ltd., London, GB; Class A93, AN 81-29795D & JP-A-56 022 665 ( NIPPON OILS & FATS KK) , 3.März 1981
- DATABASE WPI Section Ch, Week 8247 Derwent Publications Ltd., London, GB; Class A93, AN 82-00688J & JP-A-57 166 352 ( HARIMA KASEI KOGYO) , 13.Oktober 1982 in der Anmeldung erwähnt
- DATABASE WPI Section Ch, Week 9316 Derwent Publications Ltd., London, GB; Class L02, AN 93-132018 & SU-A-1 730 082 ( LENGD ENG CONSTR INST) , 30.April 1992

## Beschreibung

Viele Betonbauwerke und Betonbauteile sind einer ständigen Belastung von Umwelteinflüssen ausgesetzt. So unterliegen beispielsweise Verkehrsflächen aus Zementbeton im Winter einem häufigen Wechsel von Frost- und Tauwetter, gegebenenfalls auch einer zusätzlichen Einwirkung chemischer Auftaumittel, die zu einer vorzeitigen Zerstörung des Betons führen können. Dies gilt auch für Betonbauwerke oder Teile von ihnen, die ähnlichen Bedingungen unterliegen, wie z.B. im Spritzbereich von Verkehrsflächen oder im Wasserbau. Durch häufigen Frost-Tau-Wechsel kann Beton beschädigt oder zerstört werden, wenn seine Poren so weit wassergefüllt sind, daß der Beton einen kritischen Sättigungsgrad aufweist. Die Mechanismen, die eine solche Schädigung hervorrufen, sind nur teilweise geklärt. Wegen des Einflusses von Oberflächenkräften in den feinen Kapillarporen des Zementsteines sowie der Gefrierpunkterniedrigung durch gelöste Stoffe im Porenwasser gefriert das Wasser im Zementstein noch nicht bei 0°C. Vielmehr nimmt der Anteil des gefrierbaren Wassers mit weiter sinkender Temperatur stetig zu. Hydrostatische Drücke im noch nicht gefrorenen Wasser, ausgelöst durch die Volumensvergrößerung des gefrorenen Wassers, osmotische Drücke sowie eine Umverteilung des Wassers im Porensystem des Zementsteines können dann zu so hohen inneren Spannungen führen, daß der Beton zerstört wird. Man kann jedoch Betonbauwerke und -bauteile herstellen, die einen hohen Frostwiderstand aufweisen, wenn durch künstlich eingeführte, fein verteilte Luftporen ein ausreichender Expansionsraum geschaffen wird. Solche fein verteilten Luftporen können künstlich eingeführt werden, wenn man Beton- und Mörtelmischungen geeignete Stoffe hinzufügt, die in der abbindenden Mischung definierte Expansionsräume schaffen, die ihrerseits schädigende Spannungen durch gefrierendes Wasser vermindern bzw. verhindern. Es sind für diesen Zweck verschiedenste Stoffe vorgeschlagen worden, wie z.B.:
1. organische grenzflächenaktive Stoffe,
2. Stoffe, die durch Auslösen chemischer Reaktion im noch nicht erstarrten Beton Gasporen oder Gasblasen erzeugen, 3. schaumig vorgeformte und/oder granulierte Feststoffe aus Kunststoffen oder aus anorganischen Materialien bzw. Gemische dieser Materialien.

Alle diese Verfahren haben bekanntlich Nachteile und können nicht für jeden Anwendungszweck eingesetzt werden. Besonders das unter 1) beschriebene Verfahren ist wegen der außerordentlichen Einfachheit und guten Reproduzierbarkeit der Dosierung des Tensides sehr verbreitet. Als Beispiel für diese Luftporenbildner sind Alkalisalze von Harzsäuren, sulfonierte Harzsäuren, Alkylsulfonate, Alkylarylsulfonate, Salze von Fettsäuren usw. zu nennen.

Der Einsatz von grenzflächenaktiven Substanzen reicht von anionenaktiven über nichtionogene zu den kationenaktiven Stoffen, wie beispielsweise in EP 0 054 175, US 4 019 916, US 4 249 948, US 4 453 978 oder SU 629 185 beschrieben wurde.

Besonders häufig wurden als Luftporenbildner die oben genannten Harzsäuren oder deren Derivate eingesetzt. So ist der Einsatz eines als "Vinsol" bezeichneten Wurzelharzes allgemein als Stand der Technik zu betrachten und "Vinsol Resin" ist auch in der ASTM Spezifikation C-226-86 "Air Entraining Additions for use in the Manufacture of Air Entraining Portland Cement" als Standard akzeptiert und namentlich genannt.

Darüber hinaus ist eine ganze Reihe von anderen modifizierten Harzen bzw. deren Seifen, die als Luftporenbildner wirksam sind, bekannt. Aus JP 58 01057 ist der Einsatz eines mit einem Ethylenoxid-Laurylaminaddukt modifizierten Harzes als Luftporenbildner bekannt.

In DD 291901 wird ein Luftporenbildner basierend auf mit Paraformaldehyd methylolisiertem Tallharz beschrieben.

Ein anderes Verfahren nach SU 800 157 sieht vor, daß vor der Verseifung der eingesetzten Harzsäuren diese einer Thermooxidation unterzogen werden, als deren Ergebnis ein dimeres Produkt entsteht.

In JP 57 166352 ist der Einsatz eines mit Maleinsäureanhydrid verstärkten, mit Polyethylenglykol veresterten und anschließend mit KOH verseiften Kolophoniumharzes als Luftporenbildner beschrieben. In JP 56 022 665 wird ein Gemisch aus einem anionischen grenzflächenaktiven Mittel und einem Glykolether in einem bestimmten Gewichtsverhältnis als Luftporenbildner für Beton beschrieben.

Der Anteil und die Qualität (Porendurchmesser, Abstandsfaktor) der in den Beton eingetragenen Luftporen sowie die Stabilität des Luftporensystems wird durch die Qualität des gewählten Luftporenbildners und durch seine Konzentration bestimmt. So ist es verständlich, daß ein industriell anwendbarer Luftporenbildner in seinen wäßrigen Lösungen lagerstabil sein muß. Er darf über den Verbrauchszeitraum bei gleicher Volumensdosierung keine unterschiedliche Luftporenmenge eintragen. Der Luftporenbildner darf aus seinen Lösungen nicht als Feststoff ausfallen, oder aber er muß im Fall des Ausfallens eine ausreichend stabile kolloidale Lösung bilden, die bei Mengedosierung z.B. in das Anmachwasser eine konstante Wirkstoffdosierung und einen Luftporeneintrag gewährleistet. Dieses Qualitätskriterium war bei den oben genannten Harzen bzw. modifizierten Harzen, vor allem beim Einsatz von hartem bzw. sehr hartem Wasser, nicht immer gewährleistet.

Der Erfindung liegt die Aufgabe zugrunde, einen auch in hartem Wasser stabilen Luftporenbildner mit hoher Wirksamkeit zu entwickeln.

Erfindungsgemäß wird dies dadurch erreicht, daß der Luftporenbildner ein Salz eines Kolophoniumharzes mit einem Aminoalkohol und Alkali ist und in Form eines Feststoffes, einer wässerigen Lösung, einer kolloidalen wässerigen Lösung oder einer wässerigen Dispersion vorliegt.

Als salzbildender Aminoalkohol liegen im erfindungsgemäßen Luftporenbildner vorzugsweise Ethanolamin, Diethanolamin, Triethanolamin, Dimethylethanolamin, Methyldiethanolamin, Tri-n-propanolamin, Triisopropanolamin, Isobutyldiethanolamin, n-Butyldiethanolamin bzw. deren Gemische vor, als Alkali werden NaOH, KOH oder Natriumcarbonat bevorzugt.

Als Kolophoniumharz werden bevorzugt modifiziertes und/oder nichtmodifiziertes Balsamharz, Tallharz oder Wurzelharz und/oder deren Gemische eingesetzt. Modifizierte Harze können verstärkt und/oder disproportioniert sein. Unter Verstärkung ist die auf übliche Weise durchgeführte Diels-Alder-Adduktbildungsreaktion von Kolophoniumharzen mit α,β-ungesättigten Carbonylverbindungen, wie Fumarsäure, Maleinsäure, Maleinsäureanhydrid, Itaconsäure, Itaconsäureanhydrid, Acrylsäure, Methacrylsäure usw., unter den für diese Reaktion üblichen Bedingungen zu verstehen. Bei der Disproportionierung handelt es sich um die Stabilisierung des Harzes durch Umwandlung von Abietin-, Neoabietin- und Palustrinsäure zu Dehydro-, Dihydro- und Tetrahydroabietinsäure durch Einwirkung von hoher Temperatur und/oder geeigneten Katalysatoren, wie Pd/C, Ni/C, Pt/C, Jod, organischen Jodderivaten, organischen Schwefelderivaten usw. (vgl. auch D.F. Zinkel und J. Russel; Naval Stores - Production, Chemistry, Utilization; Pulp Chemical Association; 1989, S. 262-298).

Die oben beschriebenen Verfahren zur Modifizierung von Kolophoniumharzen sind allgemein bekannt und als Stand der Technik für die Modifizierung von Kolophoniumharzen für eine ganze Reihe von Anwendungen wie z.B. als Papierleimungsmittel, Klebstoffe, Lackrohstoffe usw. zu bezeichnen.

Es wurde überraschenderweise gefunden, daß die erfindungsgemäßen kolloidalen, dispergierten oder vollständig gelösten Kolophoniumharzderivat-Luftporenbildner gegenüber dem StandardLuftporenbildner "Vinsol" nicht nur wesentlich stabilere wässerige Lösungen oder Dispersionen ergeben, sondern auch, einschließlich der festen erfindungsgemäßen Kolophoniumharzderivate, als Luftporenbildner wesentlich wirksamer sind.

Das wesentliche Merkmal der vorliegenden Erfindung ist, daß das modifizierte oder nichtmodifizierte Kolophoniumharz als Salz mit einem oder mehreren Aminoalkoholen und Alkali wie NaOH oder KOH vorliegt, wobei die Aminoalkoholzugabe so durchzuführen ist, daß es zu keiner Ester- und/oder Amidbildung zwischen dem Kolophoniumharz oder dem modifizierten Kolophoniumharz und dem Aminoalkohol bzw. Aminoalkoholgemisch kommen kann. Die Menge des benötigten Aminoalkohols bzw. Aminoalkoholgemisches in den erfindungsgemäßen Luftporenbildnern liegt zweckmäßig zwischen 0,5 Gew.-% und 50 Gew.-%, insbesondere bei 3 Gew.-% bis 30 Gew.-%.

Die Verstärkung des Kolophoniumharzes bzw. disproportionierten Kolophoniumharzes bzw. deren Gemische mit α,β-ungesättigten Carbonylverbindungen kann auf übliche Weise bei Reaktionstemperaturen von 160 bis 300°C, insbesondere bei 200 bis 250°C, über 1 bis 5 Stunden durchgeführt werden, wobei die benötigte Menge der α,β-ungesättigten Carbonylverbindung zwischen 1 Gew.-% und 30 Gew.-%, insbesondere zwischen 5 Gew.-% und 25 Gew.-% liegt.

Die Disproportionierung von Kolophoniumharz, modifiziertem Kolophoniumharz bzw. deren Gemischen kann z.B. mit 5% Pd auf Aktivkohle bei Temperaturen von 180 bis 280°C unter N₂ über 1 bis 24 Stunden, insbesondere 2 bis 10 Stunden durchgeführt werden.

Die erfindungsgemäßen Luftporenbildner können als Feststoff dem Zement direkt beigemengt werden oder sind als Dispersion, kolloidale Lösung oder vollverseifte Lösung über das Anmachwasser der Zementmasse beizugeben, wobei diese Dosierungsart wegen ihrer Einfachheit, hohen Genauigkeit und guten Reproduzierbarkeit bevorzugt wird. Zweckmäßig erfolgt die Zugabe des erfindungsgemäßen Luftporenbildners in einer Menge von 0,001 bis 0,1%, bezogen auf Zement.

Im folgenden wird die Erfindung anhand von Beispielen näher erläutert. Die Eigenschaften der erfindungsgemäßen Luftporenbildner werden mit dem dem Stand der Technik entsprechenden Luftporenbildner Vinsol verglichen.

**Beispiel 1**: 4 kg Balsamharz werden unter N₂ geschmolzen, 0,8 kg Fumarsäure zudosiert, die Reaktionstemperatur auf 250°C erhöht und 5 Stunden gehalten und schließlich auf 150°C abgekühlt. Das so erhaltene verstärkte Balsamharz hat eine Säurezahl von 270 mg KOH/g und einen Erweichungspunkt von 130°C. Nach schneller Zugabe von 1,5 kg Triethanolamin wird das Salz mit 20%iger NaOH-Lösung auf pH 10,5 und anschließend mit Leitungswasser auf einen Trockengehalt von 30% eingestellt. Diese klare, stabile Stammlösung wurde dann mit 25°dH hartem Wasser auf 4% Trockengehalt verdünnt.

**Beispiel 2**: 1 kg des nach dem Beispiel 1 mit Fumarsäure verstärkten Harzes wird auf Korngröße <50 µm zerkleinert (Beurteilung mit Mikroskop). Das so erhaltene Harzpulver wird unter heftigem Rühren in 1 1 Leitungswasser aufgeschlämmt, mit 0,3 kg Triethanolamin versetzt, mit 20%iger NaOH auf pH 10,5 und anschließend mit Leitungswasser auf einen Trockengehalt von 30% eingestellt. Diese klare, stabile Stammlösung wurde dann mit 25°dH hartem Wasser auf 4% Trockengehalt verdünnt.

**Beispiel 3**: 0,9 kg des nach dem Beispiel 1 mit Fumarsäure verstärkten Harzes werden mit einem Gemisch von 1,2 kg Natriumcarbonat und 0,06 kg Triethanolamin auf Korngröße <50 µm zerkleinert. Das so erhaltene Harzpulver wird mit Leitungswasser gelöst und auf einen Trockengehalt von 30% eingestellt. Diese klare, stabile Stammlösung wurde dann mit 25°dH hartem Wasser auf 4% Trockengehalt verdünnt.

**Beispiel 4**: 5 kg Tallharz werden mit 0,01 kg eines 5% pd/C-Katalysators K-0227 (Fa. Hereaus) 10 Stunden bei 230°C unter N₂ auf einen Abietinsäuregehalt von weniger als 15% disproportioniert, der Katalysator wird abfiltriert und das Harz wird mit 0,1 kg Maleinsäureanhydrid 3 Stunden bei 250°C verstärkt und anschließend auf 150°C abgekühlt. Das so erhaltene Harz hat eine Säurezahl von 195 mg KOH/g und einen Erweichungspunkt von 90°C. Nach schneller Zugabe von 1,2 kg Diethanolamin wird das Salz mit 20%iger KOH-Lösung auf pH 11 und anschließend mit Leitungswasser auf einen Trockengehalt von 30% eingestellt. Diese klare, stabile Stammlösung wurde dann mit 25°dH hartem Wasser auf 4% Trockengehalt verdünnt.

**Beispiel 5**: Die gemäß den Beispielen 1 bis 4 hergestellten 30%igen und 4%igen Lösungen bzw. Dispersionen wurden auf ihre Langzeitstabilität als Lösung bzw. Dispersion und auf ihre Eignung als Beton-Luftporenbildner getestet. Die Ergebnisse wurden mit jenen des Vinsol-Harzes (Fa. Hercules Corp.) verglichen, wobei die 30%ige bzw. 4%ige Vinsol-Lösung gemäß den in den Beispielen 1 bis 4 angeführten Verfahren vorbereitet wurde. Die Ausprüfung zur Beurteilung, ob die nach den Beispielen 1 bis 4 hergestellten Substanzen und das Vinsol-Harz als Ausgangsstoff zur Ausbildung von Luftporensystemen geeignet sind, wurde in Anlehnung an die technischen Richtlinien der Österreichischen Gesellschaft für Verkehr und Straßenwesen RVS 8.01.71 durchgeführt.

Die Untersuchungsergebnisse sind in der Tabelle 1 zusammengefaßt.

**Tabelle 1**

| Produkt gemaß Beispiel Nr. | Wirkstoffgehalt (% atro) auf Zement | Luftporen (%) | Abstandfaktor Kugelporen (mm) | Mittlerer Porendurchmesser (mm) | Lagerstabilität nach 6Wochen | |
|---|---|---|---|---|---|---|
| | | | | | 30% | 4% |
| 1 | 0.015 | 6.5 | | | gut | gut |
| 1 | 0.0075 | 5.4 | | | | |
| 1 | 0.0036 | 4.7 | 0.1 | 0.1 | | |
| 2 | 0.0036 | 4.3 | 0.09 | 0.1 | gut | gut |
| 3 | 0.0036 | 4.0 | 0.1 | 0.1 | gut | gut |
| 4 | 0.009 | 6.4 | 0.08 | 0.11 | gut | gut |
| 4 | 0.0045 | 3.9 | 0.11 | 0.11 | | |
| Vinsol | 0.03 | 6.8 | 0.12 | 0.1 | **fest** | gut |
| Vinsol | 0.015 | 3.3 | 0.13 | 0.12 | | |

## Patentansprüche

1. Luftporenbildner für Beton- und Mörtelmischungen auf der Basis von Kolophoniumharzen, dadurch gekennzeichnet, daß er ein Salz eines Kolophoniumharzes mit einem Aminoalkohol und Alkali ist und in Form eines Feststoffes, einer wässerigen Lösung, einer kolloidalen wässerigen Lösung oder einer wässerigen Dispersion vorliegt.

2. Luftporenbildner nach Anspruch 1, dadurch gekennzeichnet, daß als Aminoalkohol Ethanolamin, Diethanolamin, Triethanolamin, Dimethylethanolamin, Methyldiethanolamin, Tri-n-propanolamin, Triisopropanolamin, Isobutyldiethanolamin, n-Butyldiethanolamin bzw. deren Gemische vorliegen.

3. Luftporenbildner nach Anspruch 1 oder 2, dadurch gekennzeichnet, daß als Alkali NaOH, KOH oder Natriumcarbonat vorliegen.

4. Luftporenbildner nach einem der Ansprüche 1 bis 3, dadurch gekennzeichnet, daß als Kolophoniumharz modifiziertes und/oder nichtmodifiziertes Balsamharz, Tallharz oder Wurzelharz und/oder deren Gemische vorliegen.

5. Luftporenbildner nach Anspruch 4, dadurch gekennzeichnet, daß durch Verstärkung mit α,β-ungesättigten Carbonylverbindungen, durch Disproportionierung durch Einwirkung von hoher Temperatur und/oder eines geeigneten Disproportionierungskatalysators oder durch Kombination dieser beiden Maßnahmen modifizierte Kolophoniumharze oder deren Gemische vorliegen.

6. Luftporenbildner nach einem der Ansprüche 1 bis 5, dadurch gekennzeichnet, daß eine wässerige Kolophoniumsalzdispersion durch Zusatz anionischer, kationischer und/oder nichtionogener Tenside stabilisiert ist.

7. Verwendung der Luftporenbildner nach einem der Ansprüche 1 bis 6 zur Ausbildung von Luftporensystemen in Beton- und Mörtelmischungen.

8. Verwendung der Luftporenbildner nach Anspruch 7, mit der Maßgabe, daß die Zugabe des Luftporenbildners in einer Menge im Bereich von 0,001-0,1%, bezogen auf Zement, erfolgt.

## Claims

1. Air entraining agent for concrete and mortar mixtures based on rosin, characterized in that the agent is a salt of rosin with an amino alcohol and alkali, and is present in the form of a solid substance, an aqueous solution, a colloidal, aqueous solution or an aqueous dispersion.

2. Air entraining agent according to claim 1, characterized in that ethanol amine, diethanol amine, triethanol amine, dimethyl ethanol amine, methyl diethanol amine, tri-n-propanol amine, triisopropanol amine, isobutyl diethanol amine, n-butyl diethanol amine or mixtures thereof are present as an amino alcohol.

3. Air entraining agent according to claim 1 or 2, characterized in that NaOH, KOH or sodium carbonate is present as an alkali.

4. Air entraining agent according to one of claims 1 through 3, characterized in that modified and/or non-modified gum rosin, tall resin or wood rosin and/or mixtures thereof are present as rosin.

5. Air entraining agent according to claim 4, characterized in that modified rosins or mixtures thereof obtained by means of reinfrocing with α,β-unsatured carbonyl compounds, disproportionation through the effect of a high temperature and/or a suitable disproportionating catalyst, or by means of a combination of these two measures are present.

6. Air entraining agent according to one of claims 1 through 5, characterized in that an aqueous rosin salt dispersion is stabilized by the addition of anionic, cationic, and/or non-ionogenic surfactants.

7. Use of the air entraining agents according to one of claims 1 through 6 to create air entraining systems in concrete and mortar mixtures.

8. Use of the air entraining agents according to claim 7, with the measure of adding the air entraining agent in a quantity within a range of 0,001 - 0,1 % with respect to cement.

## Revendications

1. Agent aérateur pour des mélanges de béton et de mortier, à base de résines de colophane, caractérisé par le fait qu'il est constitué par un sel d'une résine de colophane avec un aminoalcool et un alcali, et qu'il se trouve sous la forme d'une substance solide, d'une solution aqueuse, d'une solution aqueuse colloidale ou d'une dispersion aqueuse.

2. Agent aérateur selon la revendication 1, caractérisé par le fait qu'en tant qu'aminoalcool, il comprend l'éthanolamine, la diéthanolamine, la triéthanolamine, la diméthyléthanolamine, la méthyldiéthanolamine, la tri-n-propanolamine, la triisopropanolamine, l'isobutyldiéthanolamine, la n-butyldiéthanolamine ou un mélange de celles-ci.

3. Agent aérateur selon la revendication 1 ou 2, caractérisé par le fait qu'en tant qu'alcali, il comprend NaOH, KOH ou le carbonate de sodium.

4. Agent aérateur selon l'une quelconque des revendications 1 à 3, caractérisé par le fait qu'en tant que résine de colophane, il comprend du tacamaque modifié et/ou non modifié, de la résine d'huile de pin ou de la résine extraite et/ou des mélanges de ceux-ci.

5. Agent aérateur selon la revendication 4, caractérisé par le fait que des résines de colophane, ou leurs mélanges, peuvent être modifiées par renforcement avec des composés carbonylés α,β-insaturés, par disproportionnation sous l'effet de températures élevées et/ou d'un catalyseur de disproportionnation, ou par combinaison de ces deux mesures.

6. Agent aérateur selon l'une quelconque des revendications 1 à 5, caractérisé par le fait qu'une dispersion aqueuse de sel de colophane est stabilisée par addition de tensioactifs anioniques, cationiques et/ou non ioniques.

7. Utilisation de l'agent aérateur selon l'une quelconque des revendications 1 à 6, pour la formation d'un système poreux dans des mélanges de béton et de mortier.

8. Utilisation de l'agent aérateur selon la revendication 7, étant entendu que l'addition de l'agent aérateur est réalisée en une proportion de 0,001-0,1 % par rapport au ciment.
